# EUROPÄISCHE PATENTSCHRIFT

(11) **EP 3 344 478 B1**
(45) Veröffentlichungstag und Bekanntmachung des Hinweises auf die Patenterteilung: **13.05.2020**
(21) Anmeldenummer: 16757859.0
(22) Anmeldetag: 24.08.2016
(51) Int. Cl.: B60G 7/00, B60G 13/00

(54) **LAGERBOCK**
BEARING BLOCK
SUPPORT D'APPUI

(30) Priorität: 03.09.2015 DE 102015114729
(43) Veröffentlichungstag der Anmeldung: 11.07.2018
(73) Patentinhaber: SAF-HOLLAND GmbH, 63856 Bessenbach (DE)
(72) Erfinder: FÄTH, Stefan, 63743 Aschaffenburg (DE); BRUNSCH, Bernd, 63303 Dreieich (DE); SOMMER, Niko, 63834 Sulzbach (DE)
(74) Vertreter: Müller Schupfner & Partner Patent- und Rechtsanwaltspartnerschaft mbB
(86) Internationale Anmeldenummer: PCT/EP2016/069949
(87) Internationale Veröffentlichungsnummer: WO 2017/036875

(56) Entgegenhaltungen:
- EP-A1- 1 459 914
- EP-A1- 2 325 031
- EP-A2- 1 284 208
- DE-A1-102010 024 593
- US-A- 5 337 997

## Beschreibung

Die vorliegende Erfindung betrifft einen Lagerbock, insbesondere zur Lagerung oder Anordnung von Fahrwerkskomponenten im Nutzfahrzeugbereich. Lagerböcke der in Rede stehenden Art werden dazu verwendet, um Fahrwerkskomponenten, wie beispielsweise Längslenker oder Feder- und Dämpferelemente, an einem Fahrwerks- bzw. Fahrzeugrahmen anzuordnen bzw. zu befestigen. Bekannte Systeme sind insofern impraktikabel als sie in der Regel maßlich auf bestimmte Fahrwerkskomponenten abgestimmt sind, was sie unflexibel macht. Um beim Beispiel des Längslenkers zu bleiben, ist es beispielsweise bei bekannten Lagerböcken nicht möglich, Längslenker mit einer unterschiedlichen Lagerbreite über ein und denselben Lagerbock anzubinden, da dieser dann gegebenenfalls zu groß oder zu klein bzw. zu breit oder zu schmal für den entsprechenden Lagerbock ist.

Die EP 2 325 031 A1, die den Oberbegriff des Anspruchs 1 offenbart, befasst sich mit einem Federbock, welcher einen inneren und einen äußeren Schenkel umfasst, wobei die Lagerbereiche für die Federaggregate an den Schenkeln angeordnet sind.

Die US 5 337 997 A offenbart eine Federhalterungen aus Aluminium.

Die EP 1 459 914 A1 befasst sich mit der Befestigung eines Lagerbocks einer Achseinheit.

Es ist daher Aufgabe der vorliegenden Erfindung, einen Lagerbock, insbesondere zur Lagerung oder Anordnung von Fahrwerkskomponenten, insbesondere von Nutzfahrzeugen, anzugeben, welcher die vorgenannten Nachteile beseitigt und eine hohe Variabilität bei gleichzeitig geringen Kosten und geringem Materialeinsatz ermöglicht.

Diese Aufgabe wird durch einen Lagerbock gemäß Anspruch 1 gelöst. Weitere Vorteile und Merkmale ergeben sich aus den Unteransprüchen sowie der Beschreibung und den beigefügten Figuren.

Erfindungsgemäß umfasst ein Lagerbock, insbesondere zur Lagerung oder Anordnung von Fahrwerkskomponenten, zwei im Wesentlichen gegenüberliegend angeordnete Lagerwände sowie zumindest ein Zusatzelement, wobei die Lagerwände einen ersten Lagerbereich und einen Anordnungsbereich ausbilden, wobei der Lagerbereich eine erste Lagerbreite aufweist, welche einstellbar ist, dadurch dass ein Abstand der Lagerwände im Anordnungsbereich über das zumindest eine Zusatzelement einstellbar bzw. veränderbar ist. Der Anordnungsbereich ist dazu vorgesehen, den Lagerbock an einem weiteren Element, wie einem Fahrzeug- oder Fahrwerksrahmen mittelbar oder unmittelbar anzuordnen bzw. zu befestigen. Der erste Lagerbereich dient gemäß einer Ausführungsform dazu, eine Fahrwerkskomponente, wie einen Längslenker, beispielsweise über eine entsprechende Gummibuchse zu lagern. Der erste Lagerbereich umfasst hierzu gemäß einer Ausführungsform zumindest eine erste Lagerstelle, welche zur Anordnung und Lagerung der Fahrwerkskomponente, beispielsweise eines Längslenkers ausgelegt ist. Die erste Lagerstelle, welche gemäß einer Ausführungsform z. B. als Bohrung ausgebildet ist, stellt damit also eine Drehachse bereit, bevorzugt für einen Längslenker. Grundsätzlich liegt eine bevorzugte Verwendung des Lagerbocks im Nutzfahrzeugsegment, die Verwendung ist aber nicht auf den Nutzfahrzeugbereich beschränkt und kann auch im PKW-Bereich Anwendung finden. Des Weiteren kann der Lagerbock sowohl bei Fahrzeugen mit zumindest einer angetriebenen Achse, wie beispielsweise einer Zugmaschine, zur Anwendung kommen als auch bei Anhängern, insbesondere also Nutzfahrzeuganhängern. Die Breite der ersten Lagerstelle, welche im Wesentlichen einem Abstand der Lagerwände im ersten Lagerbereich entspricht, kann individuell auf die zu lagernde Fahrwerkskomponente angepasst werden. In der Folge ergibt sich, abhängig von der Geometrie der Lagerwände, auch ein Abstand der Lagerwände im Anordnungsbereich. Mit Vorteil kann nun diese Abhängigkeit aufgelöst werden, dadurch dass der Abstand der Lagerwände im Anordnungsbereich beispielsweise über einen Abstand der Lagerwände oder insbesondere über ein Zusatzelement eingestellt, insbesondere weiter reduziert, werden kann. Die Verwendung von zumindest einem Zusatzelement erlaubt vorteilhafterweise, einen Abstand der Lagerwände im Anordnungsbereich an eine Breite, beispielsweise eines Befestigungsblechs, an welchem der Lagerbock befestigt werden soll, anzupassen. Hervorzuheben ist auch die zweiteilige Ausgestaltung umfassend zwei (getrennte) Lagerwände, deren Position zueinander individuell (entlang der Drehachse der ersten Lagerstelle) einstellbar ist. In anderen Worten sind die Lagerwände als separate Elemente ausgebildet, die insbesondere nicht stoffschlüssig verbunden sind. Gemäß einer Ausführungsform sind die beiden Lagerwände zweckmäßigerweise gleich geformt oder zumindest achsensymmetrisch ausgebildet, bezogen auf eine vertikale Ebene, die sich entlang einer Fahrrichtung erstreckt.

Mit Vorteil ermöglicht also der Lagerbock eine Anpassung der Breite der ersten Lagerstelle, beispielsweise an einen Längslenker, da eine Breite des Anordnungsbereichs über die Verwendung zumindest eines Zusatzelements einstellbar ist. Mit anderen Worten kann also eine Anordnungsbreite des Lagerbocks eingestellt werden, welche im Bereich von wenigen Millimetern, wie beispielsweise 5 mm, bis hin zu mehreren Zentimetern, wie beispielsweise 20 cm, betragen kann. Gemäß einer Ausführungsform sind die Lagerwände derart geformt, dass ein Abstand der Lagerwände im ersten Lagerbereich größer als im Anordnungsbereich ist, wobei das Verhältnis des Abstands der Lagerwände im Anordnungsbereich zu einem Abstand der Lagerwände im ersten Lagerbereich in einem Bereich von etwa 0,1 bis 0,7 liegt. Dies stellt hinsichtlich des Kraftflusses eine sehr günstige Gestaltung dar. Je nach Geometrie, kann aber auch genau das umgekehrte Verhältnis Vorteile bringen, wobei dann der Abstand der Lagerwände im Anordnungsbereich größer ist als im ersten Lagerbereich.

Erfindungsgemäß umfasst das Zusatzelement einen Klemmabschnitt, wobei der Klemmabschnitt derart im Anordnungsbereich bzw. zwischen den Lagerwänden im Anordnungsbereich angeordnet ist, dass die Anordnungsbreite des Lagerbocks verändert werden kann.

Gemäß einer Ausführungsform weist der Klemmabschnitt zumindest eine Befestigungsöffnung auf. Gemäß einer Ausführungsform ist das Zusatzelement zweckmäßigerweise als Lochblech ausgebildet, insbesondere mit einer im Wesentlichen rechteckigen Grundform. Das Lochblech kann gemäß einer Ausführungsform beispielsweise zwei bis acht, bevorzugt z. B. fünf, Bohrungen aufweisen, wobei der Anordnungsbereich bzw. die beiden Lagerwände ebenfalls diese Vielzahl von Befestigungsöffnungen aufweisen. Zweckmäßigerweise stimmt also das Lochbild der Lagerwände mit dem des Lochblechs (oder der Lochbleche) überein, sodass gemeinsame Befestigungsmittel zur Befestigung und Anordnung der Lagerwände und des Lochblechs verwendet werden können. Um die Breite des Anordnungsbereichs bzw. den Abstand der Lagerwände im Anordnungsbereich anzupassen, sind gemäß einer Ausführungsform insbesondere zwei Zusatzelemente, insbesondere beispielsweise im Wesentlichen längliche Lochbleche vorgesehen, welche an den jeweiligen Innenseiten der Lagerwände im Anordnungsbereich angeordnet sind. Letztlich kann damit über eine Dicke bzw. Stärke der Lochbleche, bzw. ganz allgemein der Zusatzelemente, der Abstand der Lagerwände im Anordnungsbereich eingestellt werden. Ein Abstand der Lagerwände im Anordnungsbereich, welcher sich aus der Breite der ersten Lagerstelle ergibt, welche z. B. an einen bestimmten Längslenker angepasst wurde, kann also über die Anordnung von zumindest einem Zusatzelement korrigiert werden. Gemäß einer Ausführungsform beträgt die Dicke/Wandstärke des Zusatzelements/Lochblechs beispielsweise etwa 5 bis 20 mm, zweckmäßigerweise etwa 8 bis 15 mm. Das gemäß einer Ausführungsform etwa rechteckige Zusatzelement/Lochblech weist dabei z. B. Seitenlängen von etwa 1-5 x 15-25 cm auf. Gemäß einer anderen Ausführungsform ist auch nur ein Zusatzelement an einer Lagerwand angeordnet.

Das Zusatzelement ist, wie auch die Lagerwände, zweckmäßigerweise aus einem Metallwerkstoff gebildet, insbesondere aus einem Stahlwerkstoff. Daneben können allerdings auch Kunststoffmaterialien oder Materialien aus einem Verbundwerkstoff, wie beispielsweise faserverstärkten Kunststoffen, zum Einsatz kommen. Hinsichtlich der Befestigungsöffnungen bzw. Bohrungen sei erwähnt, dass diese bevorzugt entlang einer Reihe angeordnet sind, wobei sich die Reihe zweckmäßigerweise entlang einer Fahrtrichtung des Fahrzeugs erstreckt. Die Bohrungen haben gemäß einer Ausführungsform beispielsweise einen Durchmesser von circa 10 bis 30 mm, zweckmäßigerweise etwa 15 bis 20 mm.

Gemäß einer Ausführungsform ist der Klemmabschnitt zumindest bereichsweise verdickt bzw. mit einer dickeren Wandstärke als der restliche Bereich des Zusatzelements ausgebildet. Dadurch kann mit Vorteil die Wandstärke des Zusatzelements noch einmal erhöht werden. Statt oder zusätzlich zu einer Verdickung können auch entsprechende Beilagscheiben etc. verwendet werden, um die Dicke des Zusatzelements noch weiter anzupassen.

Erfindungsgemäß weist das Zusatzelement einen Halteabschnitt auf, wobei zwei Halteabschnitte von zwei Zusatzelementen ausgelegt sind, einen zweiten Lagerbereich zu bilden. Der zweite Lagerbereich weist zweckmäßigerweise zumindest eine zweite Lagerstelle zur Lagerung einer weiteren Fahrwerkskomponente, wie beispielsweise einer Dämpfereinheit, auf bzw. formt diese. Gemäß einer Ausführungsform ist die erste Lagerstelle zur Lagerung eines Längslenkers ausgelegt und die zweite Lagerstelle zur Lagerung einer Dämpfereinheit. In bevorzugten Ausführungsformen liegt ein Verhältnis der Breite des Anordnungsbereichs zu einer Breite des zweiten Lagerbereichs in einem Bereich von etwa 0,08-0,9, besonders bevorzugt bei etwa 0,1-0,7. Ähnliches gilt für ein Verhältnis eine Breite des Anordnungsbereichs zu einer Breite des ersten Lagerbereichs, welches ebenfalls gemäß bevorzugter Ausführungsformen in einem Bereich von etwa 0,08-0,9, besonders bevorzugt bei etwa 0,1-0,7 liegt.

Gemäß einer Ausführungsform ist der Halteabschnitt um einen Versatz zum Klemmabschnitt bzw. allgemeiner zu einer Ebene oder Fläche, die durch den Klemmabschnitt definiert wird, versetzt. Dies ermöglicht zum einen eine Einstellung einer Breite der zweiten Lagerstelle. Zum anderen kann auch die Position der zweiten Lagerstelle relativ zur ersten Lagerstelle schnell und einfach eingestellt werden, da der Lagerbock durch die Verwendung unterschiedlicher Zusatzelemente sehr gut individualisierbar sit. Die Kombination verschiedener Zusatzelemente mit unterschiedlich ausgeformten Halteabschnitten, insbesondere mit Bezug auf die Größe des Versatzes, erlaubt eine Anpassung des Lagebocks an die unterschiedlichsten Geometrien, bei nur sehr geringem Aufwand. Bevorzugt liegt der Versatz z. B. in einem Bereich von etwa 5 bis 50 mm, besonders bevorzugt bei etwa 20 bis 40 mm. Die Breite der zweiten Lagerstelle liegt damit in einem Bereich von maximal etwa 100 mm. Der Versatz ist gemäß einer Ausführungsform derart orientiert, dass er vom Anordnungsbereich weg gerichtet ist. Es können beide Zusatzelemente den vorgenannten Versatz, welcher selbstverständlich unterschiedlich dimensioniert sein kann, aufweisen oder auch nur eines.

Gemäß einer Ausführungsform weist der zweite Lagerbereich eine Vielzahl von zweiten Lagerstellen auf, welche bevorzugt in einer Reihe angeordnet sind. Die zweite Lagerstelle ist zweckmäßigerweise ebenfalls durch eine Bohrung gebildet, durch welche eine Schraube oder ein Bolzen zur Befestigung, beispielsweise eines Gummilagers eines Schwingungsdämpfers bzw. einer Dämpfereinheit, in bekannter Weise erfolgen kann. Die Bohrung hat in verschiedenen Ausführungsformen zweckmäßigerweise einen Durchmesser von etwa 10 bis 25 mm, bevorzugt etwa 15 bis 20 mm. Mit Vorteil ist eine Vielzahl derartiger Bohrungen, beispielsweise 3-5 bzw. 4, vorgesehen, wodurch eine Vielzahl von zweiten Lagerstellen bereitgestellt werden kann. Damit werden z. B. für eine mögliche Dämpferanordnung verschiedene Anlenkungswinkel ermöglicht, wodurch sowohl eine Anpassung der Fahrwerkseigenschaften als auch die Verwendung einer Vielzahl von verschiedenen Dämpfern, welche ggf. unterschiedliche Einbaulängen bedürfen, ermöglicht werden. Die Reihe von zweiten Lagerstellen kann sich horizontal erstrecken, sie kann aber z. B. auch in einem Winkel zur Horizontalen, beispielsweise in einem Bereich von etwa 10 bis 70° erstrecken. Bevorzugte Werte liegen in einem Bereich von etwa 20 bis 60°, was sich in Bezug auf die Fahrwerkskinematik als äußerst vorteilhaft erwiesen hat. Die zweiten Lagerstellen müssen sich auch nicht exakt entlang einer Geraden erstrecken. Vorteilhaft kann insbesondere eine bogenförmige Anordnung sein, wobei der Bogen möglichst auf einer Kurve liegt, die durch den Schwingungsdämpfer beschrieben wird(bzw. werden würde), wenn er um seine Lagerstelle am Längslenker oder Achsrohr bewegt wird. Zweckmäßigerweise ist die Reihe von zweiten Lagerstellen also derart positioniert, dass eine gedachte Linie durch die Reihe in etwa senkrecht zu dem Fahrwerkselement, wie dem Schwingungsdämpfer, orientiert ist. Damit wird eine optimale Krafteinleitung in den Schwingungsdämpfer erreicht, egal in welcher Position er letztlich angeordnet ist. Eine weitere Variabilität kann auch dadurch erreicht werden, dass eine ganze Schar von zweiten Lagerstellen vorhanden ist, insbesondere also eine Vielzahl von Bohrung, z. B. angeordnet in einer Matrix oder einem Raster. Der Vorteil liegt in der großen Variabilität, welche sowohl durch die Anordnung der Zusatzelemente an den Lagerwänden bereitgestellt wird als auch durch die Ausgestaltung/Geometrie der Zusatzelemente selbst.

Hervorzuheben ist auch, dass die Zusatzelemente, dadurch dass deren Lochbild zweckmäßigerweise mit dem der Lagerwände kongruent ausgebildet ist, über die gleichen Befestigungsmittel befestigt werden können wie auch die Lagerwände. Die kongruent zueinander ausgebildeten Bohrungen ermöglichen zudem insbesondere bei gleicher Beabstandung der in Reihe liegenden Bohrungen, dass die Zusatzelemente beispielsweise in Längs- bzw. in Fahrtrichtung relativ zu den Lagerwänden versetzt angeordnet werden können, wodurch in Längsrichtung eine Positionierung der ersten Lagerstelle relativ zu der oder den zweiten Lagerstellen leicht verändert werden kann. Bei einem entsprechend ausgebildeten Lochbild in den Lagerwänden ist auch eine zueinander variable Positionierung nach oben und unten möglich, beispielsweise wenn zwei übereinander liegende Lochreihen am Lagerbock vorgesehen werden.

Gemäß einer Ausführungsform sind zumindest einige der Befestigungsöffnungen als Langlöcher ausgebildet, wobei insbesondere eine mittlere Befestigungsöffnung als Rundloch ausgeführt ist. Über die zentrale (runde) Befestigungsöffnung kann dann der Lagerbock zweckmäßigerweise gekippt werden, wodurch ein Einspuren der Achse möglich ist. Gemäß einer Ausführungsform sind beispielsweise 5 Bohrungen (in einer Reihe) vorgesehen, wobei die mittlere Bohrung als rundes Loch ausgebildet ist, während die jeweils äußeren Befestigungsöffnungen als Langlöcher ausgebildet sind. Zweckmäßigerweise können auch zwei oder mehr derart ausgebildete Reihen von Befestigungsöffnungen vorgesehen sein. Die Langlöcher sind vorzugsweise gekrümmt ausgebildet, wobei der Krümmungsradius der Distanz zu der zentralen (runden) Befestigungsöffnung entsprechen kann.

Gemäß einer Ausführungsform ist der zweite Lagerbereich, bezogen auf eine Fahrtrichtung des entsprechenden Fahrzeugs, um einen Versatz zum ersten Lagerbereich versetzt. Zweckmäßigerweise ist also auch eine Variabilität quer zur Fahrtrichtung zwischen der ersten und der zweiten Lagerstelle denkbar bzw. vorgesehen, wobei der Lagerbock gemäß einer Ausführungsform derart ausgebildet ist, dass die zweite Lagerstelle versetzt zum Anordnungsbereich orientiert wird bzw. positioniert ist. "Versetzt" bedeutet dabei, dass beispielsweise ein Längslenker und ein Schwingungsdämpfer nicht direkt übereinander angeordnet sind sondern versetzt zueinander, mit andern Worten nebeneinander, wobei der Versatz gemäß einer Ausführungsform z. B. 5 bis 20 cm aufweisen kann. In einer Draufsicht verläuft also gemäß einer Ausführungsforme der Schwingungsdämpfer links oder rechts neben dem Längslenker. Der Versatz kann über die Geometrie der Zusatzelemente erfolgen, insbesondere deren Halteabschnitte. Dabei können die zweiten Lagerstellen sowohl zwischen den Halteabschnitten gebildet werden als auch außerhalb. Dies ermöglicht es, auch ohne dass die Zusatzelemente einen Versatz oder eine bestimmte Form aufweisen, dass die erste Lagerstelle ggf. zur zweiten Lagerstelle (bezogen auf die Längsrichtung) versetzt angeordnet ist, was die Variabilität weiter erhöht und ggf. aus Bauraumgründen zu bevorzugen ist.

Gemäß einer Ausführungsform können auch die Lagerwände einen bzw. den zweiten Lagerbereich ausbilden. Das zumindest eine Zusatzelemente wirkt dann ggf. als reiner Abstandshalter.

Gemäß einer Ausführungsform ist der Anordnungsbereich an einem Befestigungsblech befestigt, welches zumindest zwei, im Wesentlich horizontal verlaufende, Reihen von Befestigungsöffnungen aufweist, wodurch der Lagerbock in unterschiedlichen Positionen bzw. Höhen befestigt werden kann.

Weitere Vorteile und Merkmale ergeben sich aus der nachfolgenden Beschreibung bevorzugter Ausführungsformen des erfindungsgemäßen Lagerbocks bzw. des erfindungsgemäßen Montagesystems mit Bezug auf die beigefügten Figuren. Einzelne Merkmale der einzelnen Ausführungsformen können dabei im Rahmen der Erfindung miteinander kombiniert werden.

Es zeigen:
- Fig. 1:: eine perspektivische Ansicht verschiedene Zusatzelemente;
- Fig. 2:: eine Seitenansicht eines Lagerbocks, angeordnet an einem Fahrzeugrahmen;
- Fig. 3:: eine perspektivische Ansicht einer weiteren Ausführungsform zweier Zusatzelemente;
- Fig. 4:: die aus Fig. 3 bekannten Zusatzelemente in eingebautem Zustand;
- Fig. 5:: die aus Fig. 3 bekannten Zusatzelemente in eingebautem Zustand;
- Fig. 6a:: eine Ausführungsform eines Befestigungsblechs;
- Fig. 6b:: eine Ausführungsform eines Befestigungsblechs mit länglichen Befestigungsöffnungen;
- Fig. 7:: eine Anordnung eines Lagerbocks an dem aus Fig. 6 bekannten Befestigungsblech;
- Fig. 8:: eine weitere Anordnung eines Lagerbocks an dem aus Fig. 6 bekannten Befestigungsblech;
- Fig. 9:: ein Beispiel eines Lagerbocks, wobei die Lagerwände eine zweite Lagerstelle ausbilden;
- Fig. 10:: eine Seitenansicht eines Lagerbocks, wobei eine zweite Lagerstelle versetzt zu einer ersten Lagerstelle angeordnet ist;
- Fig. 11a-d:: verschiedene Ausführungsformen von Zusatzelementen.

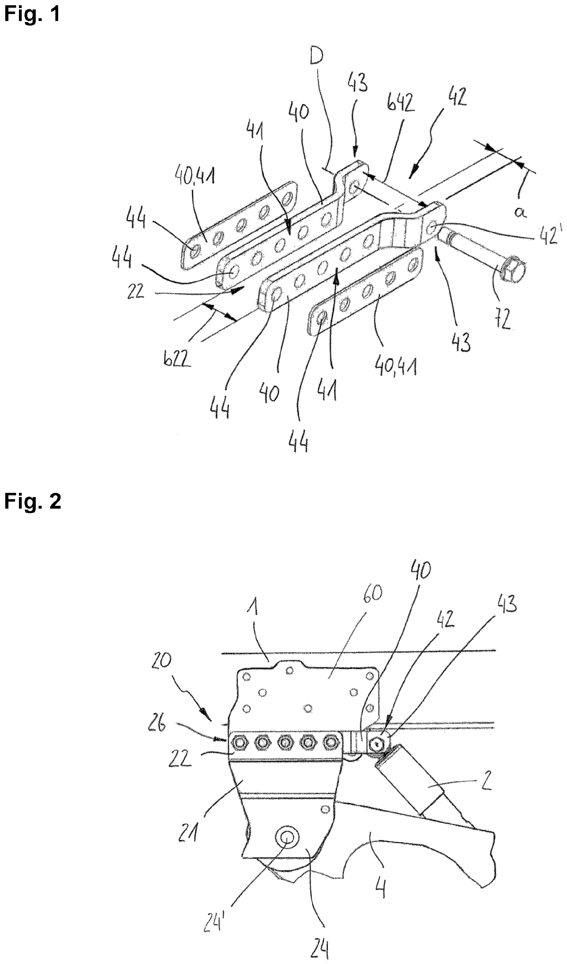

**Fig. 1** zeigt vier Zusatzelemente 40. Alle Zusatzelemente 40 weisen einen Klemmabschnitt 41 auf. Die beiden innenliegenden Zusatzelemente 40 sind derart ausgebildet, dass sie auch einen Halteabschnitt 43 aufweisen, wobei die Halteabschnitte 43 um einen Versatz a gegenüber den Klemmabschnitten 41 versetzt sind. Die Halteabschnitte 43 bilden einen zweiten Lagerbereich 42. In dem zweiten Lagerbereich 42 ist in Form einer Bohrung eine zweite Lagerstelle 42' geformt, beispielsweise zu Anordnung eines Bolzens 72, über welchen eine (hier nicht gezeigte) Fahrwerkskomponente wie z. B. ein Schwingungsdämpfer, drehbar gelagert werden kann. Die Zusatzelemente 40 weisen entsprechende Befestigungsöffnungen 44 auf, welche zur Anordnung u.a. an die Lagerwände des Lagerbocks (hier nicht gezeigt) ausgebildet sind. Über diese Anordnung kann eine Breite b22 eines Lagerbocks eingestellt werden, dadurch dass ein Abstand der Lagerwände des Lagerbocks eingestellt werden kann.

**Fig. 2** zeigt einen Lagerbock 20, welcher über ein Befestigungsblech 60 an einem Fahrzeugrahmen 1 befestigt ist. Der Lagerbock umfasst einen ersten Lagerbereich 24 und einen zweiten Lagerbereich 42, wobei an dem zweiten Lagerbereich 42 ein Schwingungsdämpfer 2 drehbar gelagert ist. An einer ersten Lagerstelle 24', gebildet durch eine entsprechende Bohrung, ist ein Längslenker 4 drehbar gelagert. Der Lagerbock 20 umfasst Lagerwände 21, welchen einen Anordnungsbereich 22 bilden. Dessen Breite ist über die Zusatzelemente 40 eingestellt und an eine Breite des Befestigungsblechs 60 angepasst. Die Zusatzelemente 40 formen über entsprechende Halteabschnitte 43 die zweite Lagerstelle 42 und sind mit ihren Klemmabschnitten 41 im Anordnungsbereich 22 bzw. innerhalb der Lagerwände 21 angeordnet. Die Lagerwände 21 weisen im Anordnungsbereich 22 entsprechende Befestigungsöffnungen 26 auf, welche hier durch entsprechende Schrauben verdeckt sind.

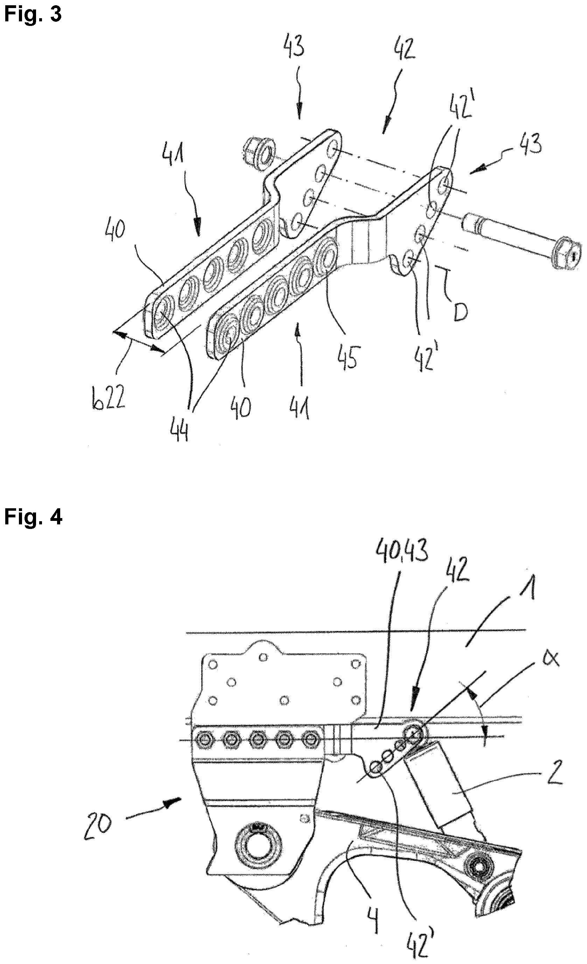

**Fig. 3** zeigt zwei Zusatzelemente 40, welche jeweils einen Klemmabschnitt 41 und einen Halteabschnitt 43 umfassen. Der Halteabschnitt 43 formt einen zweiten Lagerbereich 42, welcher in der hier gezeigten Ausführungsform vier zweite Lagerstellen 42' aufweist. Es werden also vier Drehachsen D für die Anordnung entsprechender Fahrwerkskomponenten bereitgestellt. Die Zusatzelemente 40 umfassen jeweils fünf Befestigungsöffnungen 44, wobei der Bereich um die Befestigungsöffnungen 44 mit lokalen Verdickungen 45 versehen ist, wodurch eine Stärke/Dicke der Zusatzelemente 40 weiter erhöht ist. Zwischen den Zusatzelementen 40 bemisst sich eine Breite b22 eines Anordnungsbereichs eines Lagerbocks.

Mit Bezug auf Fig. 3 zeigt die **Fig. 4** eine Verwendung der aus der Fig. 3 bekannten Zusatzelementen 40. Zu sehen ist, dass ein Schwingungsdämpfer 2 in einer obersten der vier zweiten Lagerstellen 42' angeordnet ist. In diese Darstellung ist auch deutlich ein Winkel α erkennbar, welcher sich zwischen einer Horizontalen und der in einer Reihe angeordneten zweiten Lagerstellen 42' bemisst. Typische Werte liegen in einem Bereich von etwa 10 bis 70°.

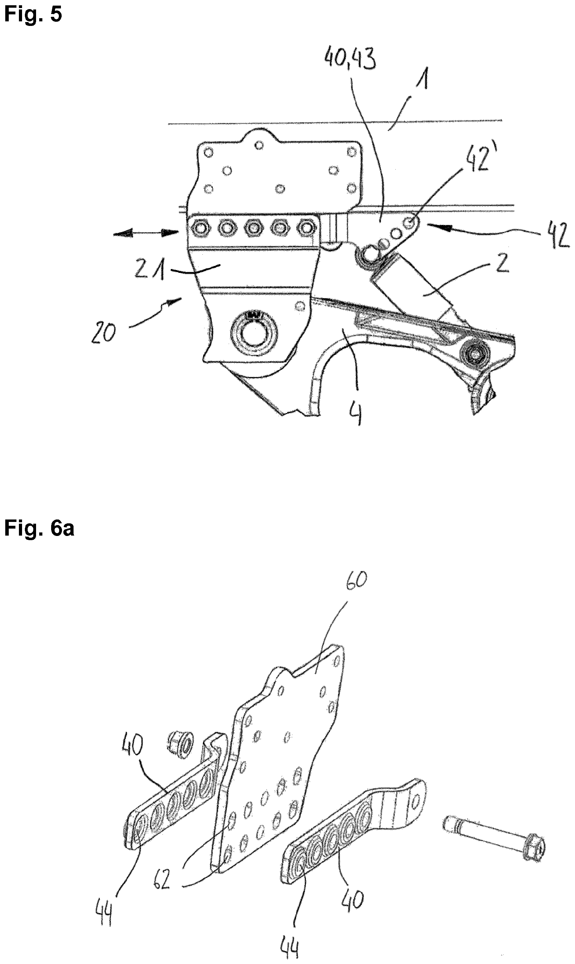

Demgegenüber zeigt die **Fig. 5** die Anordnung in einer unteren Position. Denkbar ist auch, dass die Zusatzelemente 40, wie durch den Doppelpfeil angedeutet, relativ zu den Lagerwänden 21 versetzt angeordnet werden, wobei auch dadurch eine individuellere Positionierung ermöglicht wird.

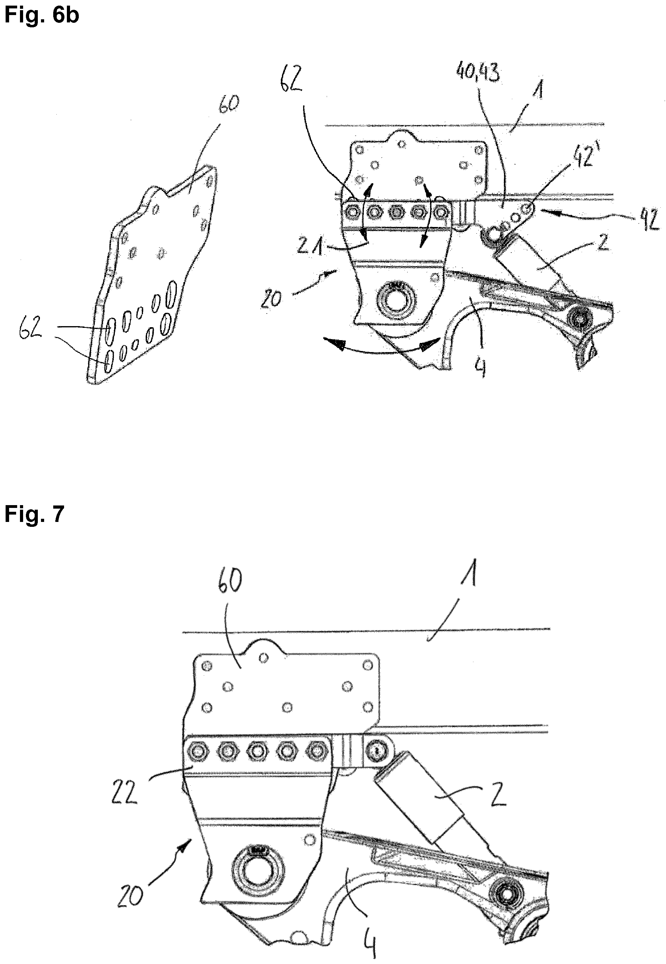

**Fig. 6a** zeigt eine Ausführungsform eines Befestigungsblechs 60, wobei hier insbesondere die beiden Reihen von Befestigungsöffnungen 62 hervorzuheben sind. Im Übrigen zeigt die Fig. 6 Bauteile, welche aus den vorgenannten Figuren bekannt sind.

**Fig. 6b** zeigt eine Ausführungsform eines Befestigungsblechs 60, welches ebenfalls zwei Reihen von Befestigungsöffnungen 62 aufweist. Während die jeweils mittleren Befestigungsöffnungen als Rundlöcher/Bohrungen ausgeführt sind, sind die übrigen Befestigungsöffnungen als Langlöcher ausgebildet, wobei die Länge nach außen hin zunimmt. Über die zentrale (runde) Befestigungsöffnung kann der Lagerbock zweckmäßigerweise gekippt werden, wodurch ein Einspuren der Achse möglich ist. Zur weiteren Veranschaulichung wird auf die rechte Bildhälfte verwiesen, in welcher dieser Vorgang über die Doppelpfeile angedeutet ist.

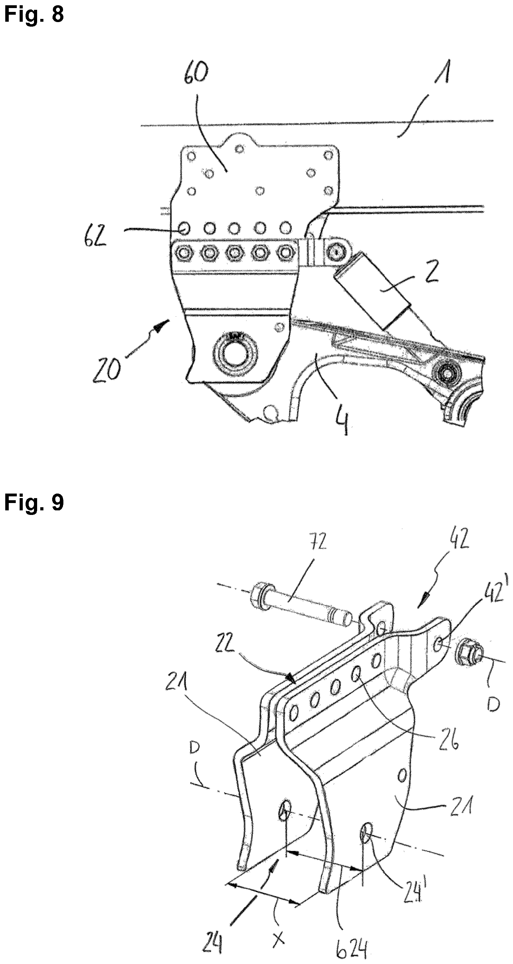

**Fig. 7** zeigt mit Bezug auf Fig. 6 die Anordnung eines Lagerbocks 20 an dem Befestigungsblech 60 in einer ersten, oberen Position, während die **Fig. 8** eine Anordnung in einer unteren Position zeigt.

**Fig. 9** zeigt einen Lagerbock mit zwei Lagerwänden 21, wobei die Lagerwände 21, zwischen welchen sich ein Abstand x erstreckt, einen ersten Lagerbereich 24 und einen zweiten Lagerbereich 42 ausbilden. Letztlich ergibt sich über den Abstand x auch die Breite b24 des ersten Lagerbereichs 24.

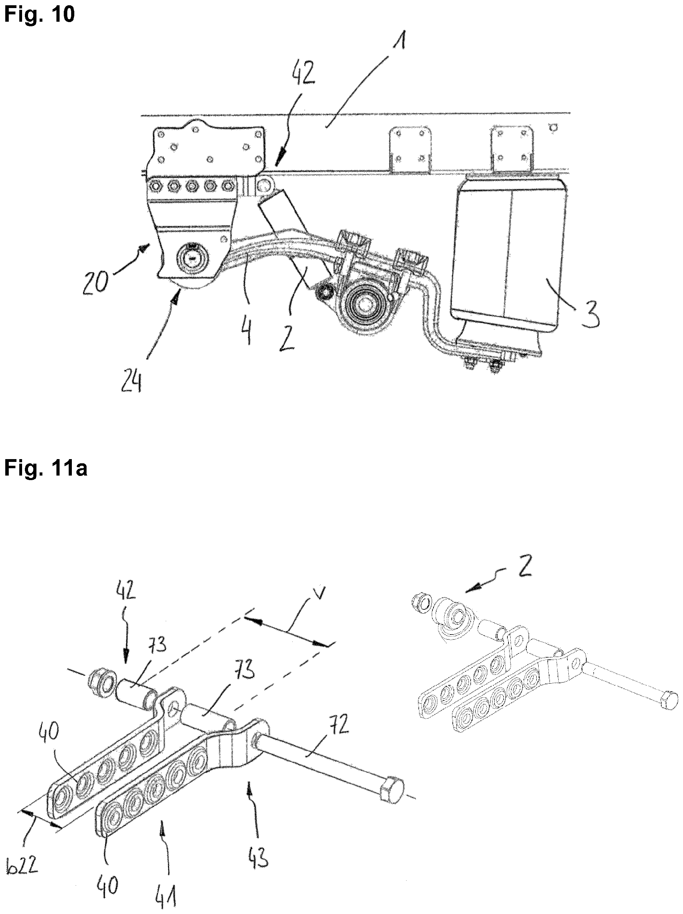

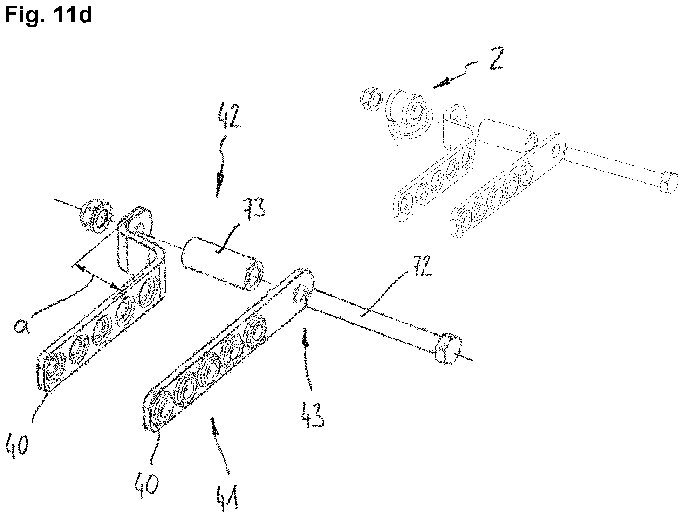

**Fig. 10** zeigt in einer Seitenansicht eine Anordnung eines Lagerbocks 20 an einem Fahrzeugrahmen 1, wobei hier eine zweite Lagerstelle 42 derart versetzt zu einer ersten Lagerstelle 24 angeordnet ist, dass ein Schwingungsdämpfer 2 neben einem Querlenker 4, welcher über einen Luftfederbalg 3 an dem Fahrzeugrahmen 1 angeordnet ist, positioniert ist. Entsprechende geformte Zusatzelemente 40 sind beispielsweise in der Fig. 11a gezeigt.

**Fig. 11a** zeigt eine Ausführungsform zweier Zusatzelemente 40, welche einen Klemmabschnitt 41 und einen Halteabschnitt 43 aufweisen. Die Halteabschnitte 43 formen/bilden einen zweiten Lagerbereich 42, welcher allerdings um einen Versatz v versetzt zu einem ersten Lagerbereich (dessen Mittellinie durch die rechte gestrichelte Linie angedeutet ist) angeordnet ist. Ermöglicht wird dies über die Verwendung von zwei Hülsen 73, wobei die rechte Hülse 73 als Abstandshalter/Distanzbuchse dient, während über die linke Hülse 73 eine Fahrwerkskomponente, wie ein Schwingungsdämpfer, gelagert wird. Diese Anordnung ist in der rechten Bildhälfte veranschaulicht.

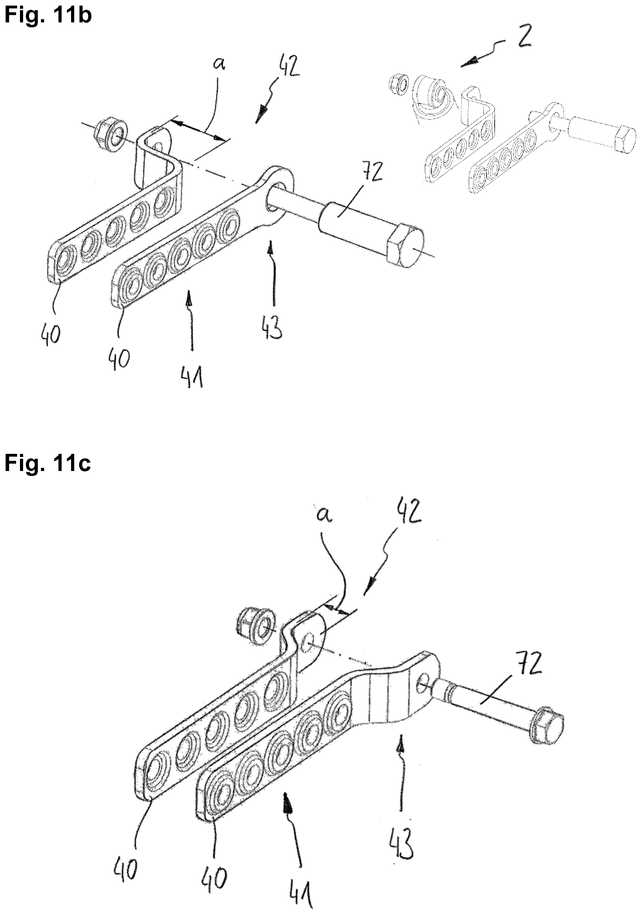

Die **Fig. 11b****-d** zeigen verschiedene Ausführungsformen von Zusatzelementen 40, wobei die Anordnung eines Fahrwerkselements zwischen Halteabschnitten 43 erfolgt. Durch die unterschiedliche Gestaltung der Zusatzelemente 40 lassen sich sehr leicht verschiedenste Konfigurationen realisieren, ohne dass dies die Geometrie des restlichen Lagerbocks beeinflusst. Mögliche Anordnungen von z. B. Schwingungsdämpfern 2 sind in den Figuren 11b und 11c skizziert.

### Bezugszeichenliste

- 1: (Fahrwerks- bzw. Fahrzeug-) Rahmen
- 2: Dämpfereinheit/Schwingungsdämpfer
- 3: Luftfederbalg
- 4: Längslenker
- 20: Lagerbock
- 21: Lagerwand
- 22: Anordnungsbereich
- 24: erster Lagerbereich
- 24': erste Lagerstelle
- 26: Befestigungsöffnung
- 40: Zusatzelement
- 41: Klemmabschnitt
- 42: zweiter Lagerbereich
- 42': zweite Lagerstelle
- 43: Halteabschnitt
- 44: Befestigungsöffnung
- 45: Verdickung
- 60: Befestigungsblech
- 62: Befestigungsöffnung
- 72: Schraube, Bolzen
- 73: Hülse, Distanzbuchse
- b22: Breite Anordnungsbereich
- b24: Breite erster Lagerbereich
- b42: Breite zweiter Lagerbereich
- a: Versatz (zw. Klemmabschnitt und Halteabschnitt)
- x: Abstand der Lagerwände
- v: Versatz der Lagerbereiche
- D: Drehachse
- α: Winkel

## Patentansprüche

1. Lagerbock (20), zur Lagerung oder Anordnung von Fahrwerkskomponenten, umfassend
zwei gegenüberliegend angeordnete Lagerwände (21) sowie zumindest zwei Zusatzelemente (40),
wobei die Lagerwände (21) einen ersten Lagerbereich (24) und einen Anordnungsbereich (22) ausbilden,
wobei der erste Lagerbereich (24) eine erste Lagerbreite (b24) aufweist, und
wobei die erste Lagerbreite (b24) einstellbar ist, dadurch dass ein Abstand (x) der Lagerwände (21) im Anordnungsbereich (22) über die zumindest zwei Zusatzelemente (40) einstellbar ist,
wobei die Zusatzelemente (40) je einen Klemmabschnitt (41) aufweisen, und
wobei die Klemmabschnitte (41) derart am Anordnungsbereich (22) angeordnet sind, dass eine Anordnungsbreite (b22) des Lagerbocks (20) verändert werden kann,
**dadurch gekennzeichnet, dass** die Zusatzelemente (40) je einen Halteabschnitt (43) aufweisen, und
wobei zwei Halteabschnitte (43) ausgelegt sind, einen zweiten Lagerbereich (42) zu bilden, und wobei der zweite Lagerbereich (42) eine zweite Lagerstelle (42') zur Lagerung einer weiteren Fahrwerkskomponente aufweist, wobei die Halteabschnitte (43) um einen Versatz (a) zu einer Ebene oder Fläche versetzt sind, die durch die Klemmabschnitte (41) definiert sind.

2. Lagerbock (20) nach Anspruch 1,
wobei der Klemmabschnitt (41) zumindest eine Befestigungsöffnung (44) aufweist, welche vorzugsweise zu Befestigungsöffnungen im Anordnungsbereich (22) kongruent sind.

3. Lagerbock (20) nach einem der vorhergehenden Ansprüche,
wobei der Klemmabschnitt (41) zumindest bereichsweise verdickt ist.

4. Lagerbock (20) nach einem der vorhergehenden Ansprüche ,
wobei der Versatz (a) vom Anordnungsbereich (22) weg gerichtet ist.

5. Lagerbock (20) nach einem der vorhergehenden Ansprüche ,
wobei der zweite Lagerbereich (42) eine Vielzahl von zweiten Lagerstellen (42') aufweist, welche bevorzugt in einer Reihe angeordnet sind.

6. Lagerbock (20) nach Anspruch 5,
wobei sich die Reihe von zweiten Lagerstellen (42') horizontal oder in einem Winkel zwischen 10° und 70° zur Horizontalen erstreckt.

7. Lagerbock (20) nach einem der vorhergehenden Ansprüche,
wobei die Zusatzelemente (40indem deren Lochbild mit dem der Lagerwände (21) kongruent ausgebildet ist, über die gleichen Befestigungsmittel befestigt werden können wie die Lagerwände (21).

8. Lagerbock (20) nach einem der vorhergehenden Ansprüche,
wobei, vorzugsweise an den Lagerwänden (21), eine Vielzahl der Befestigungsöffnungen (26, 62) als Langlöcher ausgebildet sind, und wobei vorzugsweise eine mittlere Befestigungsöffnung als Rundloch ausgebildet ist.

9. Lagerbock (20) nach einem der vorhergehenden Ansprüche,
wobei der zweite Lagerbereich (42) um einen Versatz (v) zum ersten Lagerbereich (24) versetzt ist.

10. Lagerbock (20) nach einem der vorhergehenden Ansprüche,
wobei der Anordnungsbereich (22) an einem Befestigungsblech (60) befestigt ist, welches zumindest zwei im Wesentlich horizontal verlaufende Reihen von Befestigungsöffnungen (62) aufweist, wodurch der Lagerbock (20) in unterschiedlichen Positionen befestigt werden kann.

## Claims

1. A bearing block (20) for the mounting or arranging of chassis components, comprising
two oppositely arranged bearing walls (21) and at least two additional elements (40),
wherein the bearing walls (21) form a first bearing region (24) and an arranging region (22),
wherein the first bearing region (24) has a first bearing width (b24), and wherein the first bearing width (b24) is adjustable by a distance (x) of the bearing walls (21) in the arranging region (22) being adjustable via the at least two additional elements (40),
wherein the additional elements (40) have a clamping portion (41), respectively, and
wherein the clamping portions (41) are arranged on the arranging region (22) in such a manner that an arranging width (b22) of the bearing block (20) can be changed,
**characterized in that**, the additional elements (40) have a holding portion (43), respectively, and
wherein two holding portions (43) are configured to form a second bearing region (42), and wherein the second bearing region (42) has a second bearing point (42') for the mounting of a further chassis component
wherein the holding portions (43) are offset with respect to a plane or surface defined by the clamping portions (41), by an offset (a).

2. The bearing block (20) as claimed in claim 1,
wherein the clamping portion (41) has at least one fastening opening (44), said fastening openings preferably being congruent to fastening openings in the arranging region (22).

3. The bearing block (20) as claimed in one of the preceding claims,
wherein the clamping portion (41) is thickened at least in regions.

4. The bearing block (20) as claimed in one of the preceding claims,
wherein the offset (a) is directed away from the arranging region (22).

5. The bearing block (20) as claimed in one of the preceding claims,
wherein the second bearing region (42) has a multiplicity of second bearing points (42') which are preferably arranged in a row.

6. The bearing block (20) as claimed in claim 5,
wherein the row of second bearing points (42') extends horizontally or at an angle of between 10° and 70° with respect to the horizontal.

7. The bearing block (20) as claimed in one of the preceding claims,
wherein the additional elements (40), owing to the fact that the hole pattern thereof is formed congruently with that of the bearing walls (21), can be fastened via the same fastening means as the bearing walls (21).

8. The bearing block (20) as claimed in one of the preceding claims,
wherein, preferably on the bearing walls (21), a multiplicity of the fastening openings (26, 62) are designed as elongated holes, and wherein preferably a central fastening opening is designed as a round hole.

9. The bearing block (20) as claimed in one of the preceding claims,
wherein the second bearing region (42) is offset with respect to the first bearing region (24) by an offset (v).

10. The bearing block (20) as claimed in one of the preceding claims,
wherein the arranging region (22) is fastened to a fastening plate (60) which has at least two substantially horizontally running rows of fastening openings (62), as a result of which the bearing block (20) can be fastened in different positions.

## Revendications

1. Bloc de support (20) pour supporter ou agencer des composants d'un train de roulement, comprenant
deux paroi de support (21) disposées l'une à l'opposé de l'autre et au moins deux éléments supplémentaires (40),
dans lequel
les parois de support (21) forment une première zone de support (24) et une zone d'agencement (22),
la première zone de support (24) présente une première largeur de support (b24),
et
la première largeur de support (b24) est réglable du fait qu'une distance (x) des parois de support (21) dans la zone d'agencement (22) est réglable par l'intermédiaire desdits au moins deux éléments supplémentaires (40),
les éléments supplémentaires (40) comprennent chacun une portion de serrage (41), et
les portions de serrage (41) sont agencées dans la zone d'agencement (22) de telle sorte qu'il est possible de modifier une largeur d'agencement (b22) du bloc de support (20),
**caractérisé en ce que**
les éléments supplémentaires (40) comportent chacun une portion de retenue (43), et
deux portions de retenue (43) sont conçues pour former une seconde zone de support (42), et la seconde zone de support (42) comprend un second emplacement de support (42') pour supporter un autre composant du train de roulement, les portions de retenue (43) étant décalées d'un certain décalage (a) par rapport à un plan ou à une surface défini(e) par les portions de serrage (41).

2. Bloc de support (20) selon la revendication 1,
dans lequel
la portion de serrage (41) présente au moins une ouverture de fixation (44) qui est de préférence en correspondance d'ouvertures de fixation dans la zone d'agencement (22).

3. Bloc de support (20) selon l'une des revendications précédentes,
dans lequel
la portion de serrage (41) est au moins localement épaissie.

4. Bloc de support (20) selon l'une des revendications précédentes,
dans lequel
le décalage (a) est orienté en éloignement de la zone d'agencement (22).

5. Bloc de support (20) selon l'une des revendications précédentes,
dans lequel
la seconde zone de support (42) présente une multitude de seconds emplacements de support (42') qui sont disposés de préférence en une rangée.

6. Bloc de support (20) selon la revendication 5,
dans lequel
la rangée de seconds emplacements de support (42') s'étend horizontalement ou selon un angle compris entre 10° et 70° par rapport à l'horizontale.

7. Bloc de support (20) selon l'une des revendications précédentes,
dans lequel
les éléments supplémentaires (40) dont le motif de perforations est en correspondance de celui des parois de support (21) peuvent être fixés par les mêmes moyens de fixation que les parois de support (21).

8. Bloc de support (20) selon l'une des revendications précédentes,
dans lequel
de préférence sur les parois de support (21), une multitude d'ouvertures de fixation (26, 62) sont ménagées sous forme de trous oblongs, et de préférence une ouverture de fixation centrale est ménagée sous forme de trou rond.

9. Bloc de support (20) selon l'une des revendications précédentes,
dans lequel
la seconde zone de support (42) est décalée d'un certain décalage (v) par rapport à la première zone de support (24).

10. Bloc de support (20) selon l'une des revendications précédentes,
dans lequel
la zone d'agencement (22) est fixée à une tôle de fixation (60) qui présente au moins deux rangées sensiblement horizontales d'ouvertures de fixation (62), ce qui permet de fixer le bloc de support (20) dans différentes positions.
